# EUROPÄISCHE PATENTSCHRIFT

(11) **EP 2 861 403 B1**
(45) Veröffentlichungstag und Bekanntmachung des Hinweises auf die Patenterteilung: **24.08.2016**
(21) Anmeldenummer: 13730485.3
(22) Anmeldetag: 15.06.2013
(51) Int. Cl.: B29C 49/42, B65G 47/256

(54) **VEREINZELUNGSVORRICHTUNG FÜR VORFORMLINGE MIT EINER EINRICHTUNG ZUM AUSSONDERN VON FALSCH POSITIONIERTEN VORFORMLINGEN**
SINGULATION APPARATUS FOR PREFORMS, COMPRISING A DEVICE FOR ELIMINATING MISPOSITIONED PREFORMS
DISPOSITIF DE SÉPARATION DE PRÉFORMES POURVU D'UN MÉCANISME PERMETTANT D'ÉLIMINER LES PRÉFORMES MAL POSITIONNÉES

(30) Priorität: 15.06.2012 DE 102012011762
(43) Veröffentlichungstag der Anmeldung: 22.04.2015
(73) Patentinhaber: KHS Corpoplast GmbH, 22145 Hamburg (DE)
(72) Erfinder: HELLER, Alexander, 22941 Bargteheide (DE); HOLLER, Dieter, 23843 Rümpel (DE)
(74) Vertreter: Hausfeld, Norbert
(86) Internationale Anmeldenummer: PCT/EP2013/001775
(87) Internationale Veröffentlichungsnummer: WO 2013/185930

(56) Entgegenhaltungen:
- EP-A1- 1 335 870
- EP-A1- 1 697 237
- CH-A1- 702 406
- FR-A1- 2 899 882
- US-A1- 2011 120 833

## Beschreibung

Die vorliegende Erfindung betrifft eine Vereinzelungsvorrichtung für Vorformlinge mit einer Einrichtung zum Aussondern von falsch positionierten Vorformlingen. Solche Vereinzelungsvorrichtungen werden auf dem technischen Gebiet des Transportes von Vorformlingen zu einer Maschine zur Herstellung von Behältern aus einem thermoplastischen Material benötigt, wobei die Behälterformung durch Blasdruckeinwirkung erfolgt.

Bei der Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung zur thermischen Konditionierung der Vorformlinge sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert. Auf den Inhalt dieser Dokumente wird Bezug genommen.

Die Blasmaschine muss kontinuierlich mit Vorformlingen beschickt werden, um einen unterbrechungsfreien Blasmaschinenlauf zu ermöglichen. Dies gilt sowohl für lineare Blasmaschinen als auch für solche nach dem Rundläuferprinzip. Für die Bereitstellung der Vorformlinge für die Blasmaschine gibt es dabei zwei Alternativen. Bei dem sogenannten Einstufenverfahren werden die Vorformlinge in einem Spritzgussverfahren hergestellt und unmittelbar nach ihrer spritzgusstechnischen Herstellung (und nach einer ausreichenden Verfestigung) über eine Transportvorrichtung direkt zur Blasmaschine transportiert. Bei dem sogenannten Zweistufenverfahren werden die Vorformlinge zunächst in einem Spritzgussverfahren gefertigt, anschließend zwischengelagert und erst zu einem späteren Zeitpunkt hinsichtlich ihrer Temperatur konditioniert und zu einem Behälter geblasen. Die Herstellung der Vorformlinge und das Aufblasen der Vorformlinge zu Behältern können dadurch zu verschiedenen Zeiten an verschiedenen Orten stattfinden.

Beide Verfahren haben gemein, dass die Vorformlinge über eine Transportvorrichtung der Blasmaschine zugeführt werden. Bekannte Vorrichtungen bestehen z.B. aus einem Steigförderer, über den die in einem Sammelbehälter gelagerten Vorformlinge zu einer Fördereinrichtung transportiert werden. Über die Fördereinrichtung, in der Regel ein Förderband, werden die Vorformlinge zu einer Vereinzelungsvorrichtung transportiert. Diese Vereinzelungsvorrichtung hat die Aufgabe, die Vorformlinge in eine definierte Position auszurichten und zu vereinzeln, um eine geeignete Übergabe z.B. an eine nachgeschaltete Blasmaschine zu ermöglichen. Bekannte Vereinzelungsvorrichtungen (sogenannte Rollensortierer) bestehen z.B. aus zwei Förderrollen, die sich in entgegengesetzter Richtung um ihre jeweiligen Drehachsen drehen und zwischen denen ein schmaler Spalt verbleibt, der so gewählt ist, dass die Vorformlinge an ihrem Kragen hängend zwischen den drehenden Förderrollen gehalten werden können. Dabei sind die Drehachsen der Förderrollen parallel zueinander angeordnet, so dass die beiden Achsen eine Ebene aufspannen. Die Förderrollen sind mit einem Gefälle angeordnet, also um einen Gefällewinkel gegenüber der Horizontalen geneigt, so dass die Vorformlinge in Richtung des Gefälles an den Förderrollen entlang gleiten. Auf diese Weise werden die Vorformlinge zwischen den rotierenden Rollen hängend sortiert, vereinzelt und aufgrund des Gefälles auch gefördert. Die Förderung der Vorformlinge in der Vereinzelungsvorrichtung erfolgt in einer Förderebene, die parallel zu der Ebene liegt, die von den beiden Drehachsen der Förderrollen aufgespannt wird, so dass auch die Förderebene den oben genannten Gefällewinkel zur Horizontalen aufweist.

Es ist bekannt, dass Vorformlinge ausgesondert werden, die sich nicht korrekt einsortieren und daher z.B. über eine vorgegebene Höhe hinausragen. Solche Aussondereinrichtungen sind z.B. aus der WO2011/069268A1 bekannt. Dort erfolgt die Aussonderung über einen einwirkenden Luftstoß. In diesem Dokument werden weitere Aussondereinrichtungen aus dem Stand der Technik angesprochen. Einen vergleichbaren Stand der Technik zeigt die CH 702 406 A1, bei der ebenfalls ein Aussondern falsch positionierter Vorformlinge über das gezielte Anblasen mit einem Luftstoß erfolgt.

Es ist auch bekannt, zur Aussonderung drehende Räder zu verwenden; die auch als Kickerräder bezeichnet werden. Es sind solche Kickerräder bekannt, die in rückstauender Anordnung arbeiten. Die Drehachse solcher Räder verläuft parallel und in einem Höhenabstand oberhalb der Ebene, die von den beiden Drehachsen der Förderrollen des Rollensortierers aufgespannt wird. Die Drehrichtung ist dabei so gewählt, dass sich die rotierenden Schaufeln des Rades entgegen der Förderrichtung der Vorformlinge bewegen. Ein Vorformling, der über eine vorgegebene Höhe hinausragt, wird von einer Schaufel des Schaufelrades erfasst, gegen die Förderrichtung und gegen die nachdrängenden Vorformlinge herausgezogen und ausgeworfen. Es wird als nachteilig angesehen, dass sich dadurch große Lücken im Fluss der Vorformlinge ergeben.

Eine alternative Konstruktion zeigen z.B. die DE 601 18 772 T2 und die WO 02/36466 A1, die oberhalb der Förderrollen eines Rollensortierers angeordnete Kickerräder zeigt. In einem ersten Beispiel liegt die Drehachse des Kickerrades parallel und in einem Höhenabstand zu der Ebene, die von den beiden Drehachsen der Förderrollen des Rollensortierers aufgespannt wird, wobei die Drehachse schräg zu dessen Förderrichtung steht. Bei Erfassung eines Vorformlings wirkt aufgrund dieser Schrägstellung gleichzeitig eine seitliche und eine rückstauende Auswurfkraft. Es wird noch immer als nachteilig angesehen, dass es deshalb zu Lückenbildung im Vorformlingsfluss kommt.

In einem zweiten Beispiel, das die DE 601 18 772 T2 zeigt, liegt die Drehachse des Kickerrades parallel und in einem Höhenabstand zu der Ebene, die von den beiden Drehachsen der Förderrollen des Rollensortierers aufgespannt wird, wobei die Drehachse nunmehr parallel zur Förderrichtung steht. Bei Erfassung eines Vorformlings wird nur noch eine seitliche Auswurfkraft aufgebracht. Bei dieser Konstruktion wird als nachteilig angesehen, dass die Schaufeln des Kickerrades nur zu einem geringen Grad zwischen die Förderrollen eintauchen können, und dass keine Höhenanpassung möglich ist.

Es ist eine Aufgabe der vorliegenden Erfindung, ein verbesserte Vereinzelungsvorrichtung für Vorformlinge mit einer Einrichtung zum Aussondern von falsch positionierten Vorformlingen zur Verfügung zu stellen, die insbesondere für einen hohen Durchsatz geeignet ist, wie es für die Versorgung einer Hochleistungsblasmaschine mit Vorformlingen erforderlich ist..

Gelöst wird die Aufgabe durch eine Vorrichtung mit den Merkmalen des Anspruchs 1. Weitere vorteilhafte Ausgestaltungen werden in den Unteransprüchen angegeben.

Die erfindungsgemäße Vereinzelungsvorrichtung zeichnet sich durch ein Kickerrad mit seitlicher Auswurfrichtung aus, das einen Aussonderbereich oberhalb korrekt positionierter Vorformlinge kämmt, wobei die Drehachse des Kickerrades zentrisch zu den Förderrollen und in einem Höhenabstand oberhalb der Förderebene angeordnet ist, wobei sich die Drehachse des Kickerrades im wesentlichen vertikaler Richtung erstreckt und um einen Neigungswinkel > 0° aus der zur Förderebene senkrechten Position herausgekippt ist.

Der Kippwinkel kann z.B. kleiner als 20° sein, insbesondere kleiner als 10°. Durch diese leichte Verkippung und die zentrische Anordnung kann das Kickerrad zwischen die Förderrollen eintauchen.

Mit Vorteil ist dabei eine Höhenverstellbarkeit des Kickerrades vorgesehen, um z.B. abhängig von der Art der Vorformlinge die Eintauchtiefe anzupassen. Besonders bevorzugt ist dabei, dass der Kippwinkel veränderbar ist, und dadurch die Höhenverstellung erfolgt. Die Verstellbarkeit kann z.B. automatisiert ausgebildet sein. Es können dazu von der Steuerung der Anlage angesteuerte Aktoren vorgesehen sein.

Das Aussondern kann dadurch verbessert werden, dass Ausblasdüsen das Aussondern eines fehlorientierten Vorformlings unterstützen. Bevorzugt sind die Ausblasdüsen dabei von einer Lichtschranke beherrscht.

Im Folgenden wird die Erfindung anhand mehrerer in den Figuren gezeigter Ausführungsbeispiele näher erläutert. Es zeigen:
- Fig. 1: eine Vorrichtung zum Transport von Vorformlingen zu einer Blasmaschine für die Herstellung von Behältern aus einem thermoplastischen Material,
- Fig. 2a, 2b: Schnittansichten des Details X aus Fig. 1.

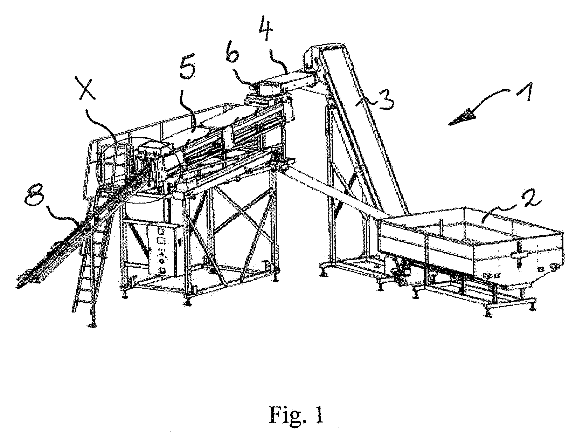

Die Fig. 1 zeigt eine Vorrichtung 1 zum Transport von Vorformlingen z.B. zu einer Blasmaschine für die Herstellung von PET-Flaschen. Die Vorrichtung besteht aus einem Sammelbehälter 2, in dem ein Vorformlingsvorrat bereitgestellt ist. Von dem Sammelbehälter 2 werden die Vorformlinge über einen Steigförderer 3 zu einem Eingabeende einer Fördereinrichtung 4 transportiert. Die Fördereinrichtung 4 ist mit ihrem anderen Ende, dem Abgabeende, oberhalb einer Vereinzelungsvorrichtung 5 angeordnet, wobei zur geordneten und möglichst störungsfreien Übergabe der Vorformlinge von der Fördereinrichtung 4 an die Vereinzelungsvorrichtung 5 eine dazwischen angeordnete Zuführeinrichtung 6 vorgesehen ist. Von der Vereinzelungsvorrichtung 5 gelangen die Vorformlinge sortiert in eine Ablauffördereinrichtung 8, über die die Vorformlinge in die Blasmaschine (nicht dargestellt) gefördert werden. Die Vereinzelungsvorrichtung ist vorliegend als Rollensortierer ausgebildet.

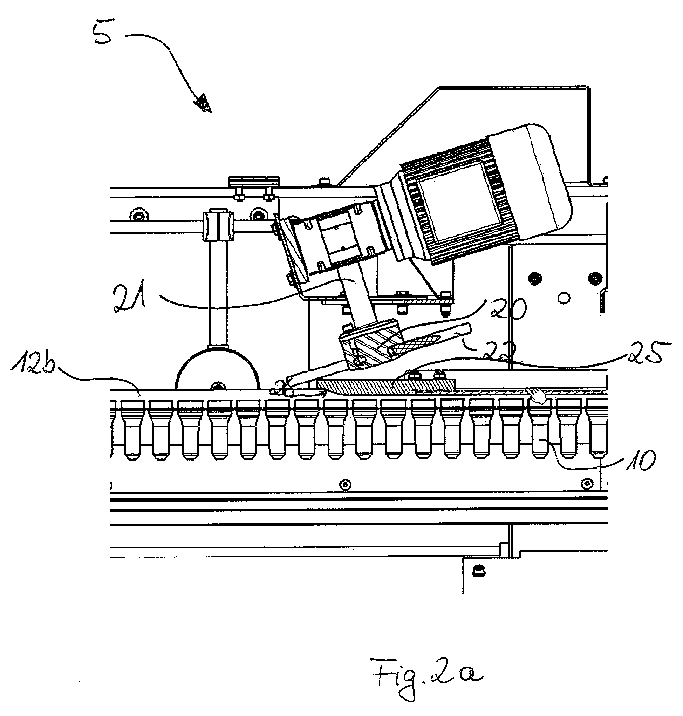

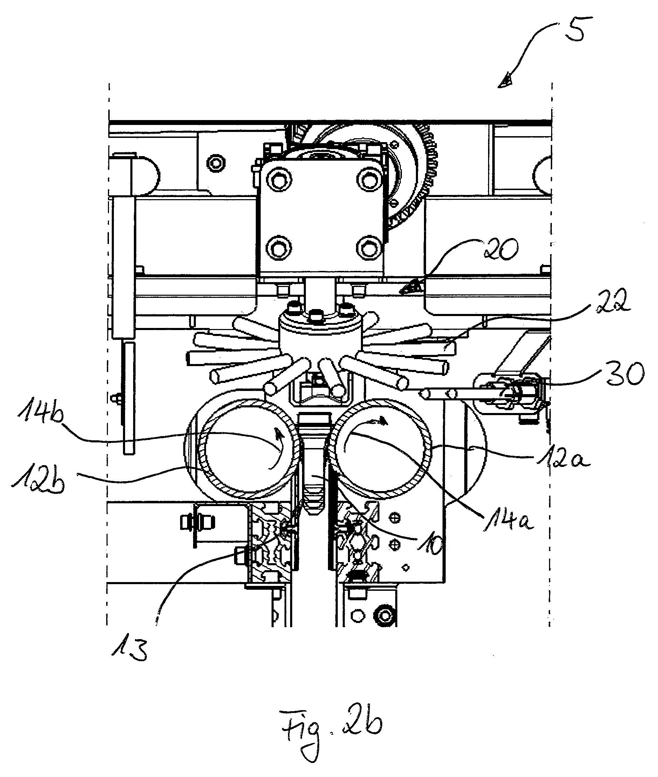

Fig. 2a zeigt im Schnitt eine Seitenansicht des in der Fig. 1 gekennzeichneten Details X, während Fig. 2b eine Schnittansicht senkrecht dazu zeigt, wobei in Förderrichtung geblickt wird. In Fig. 2a verläuft die Flussrichtung der Vorformlinge 10 von links nach rechts, in Figur 2b in die Blattebene hinein. Zu Fig. 2a ist zu beachten, dass die vordere Förderrolle 12a aus Gründen der Übersichtlichkeit weggelassen ist, und hinter den Vorformlingen 10 noch die hintere Förderrolle 12b zu erkennen ist.

Die beiden Förderrollen 12a, 12b des Rollenförderers verlaufen zueinander parallel und spannen eine sich im Wesentlichen in horizontaler Richtung erstreckende Ebene auf. Zwischen diesen Rollen 12a, 12b ist ein Spalt 13 ausgebildet, der so breit ist, dass der geschlossene Vorformlingsbereich hindurchtreten kann, nicht aber der mit einem umlaufenden Rand versehene offene Mündungsbereich. Der Rand wird auch als Kragen bezeichnet. Dieser Kragen liegt an den beiden Förderrollen 12a, 12b an und gleitet an beiden in Förderrichtung entlang. Die beiden Förderrollen 12a, 12b sind gegensinnig drehangetrieben, wie anhand der Pfeile 14a, 14b angedeutet. In der Regel ist ein Gefälle vorgesehen, das heißt die Drehachsen der Förderrollen sind um einen Gefällewinkel geneigt zur Horizontalen angeordnet, entsprechend weist dann auch die Förderebene diesen Gefällewinkel zur Horizontalen auf. Die vereinzelten und ausgerichteten Vorformlinge 10 verlassen die Vereinzelungsvorrichtung 5 in Fig. 2a nach rechts, um zu ihrer weiteren Verwendung z.B. zu einer Blasmaschine geführt zu werden.

Die Figuren 2a und 2b zeigen nur noch den in Förderrichtung gesehen hinteren Bereich der Vereinzelungsvorrichtung 5, der nicht mehr mit ungeordneten Vorformlingen beschickt wird, sondern in dem die Vorformlinge 10 bereits eine Ruheposition gefunden haben.

Anders als in Fig.2a dargestellt sind im Vorformlingsfluss häufig auch noch fehlpositionierte Vorformlinge enthalten, die aussortiert werden müssen, bevor sie zu Verklemmungen führen, die die Versorgung der nachgeschalteten Maschinen mit Vorformlingen unterbrechen. Für diese Aussortierung weist die dargestellte Vereinzelungsvorrichtung 5 ein Kickerrad 20 auf, das nachfolgend detaillierter besprochen werden soll.

Insbesondere in der Seitenansicht der Figur 2a ist erkennbar, dass die Drehachse 21 des Kickerrades 20 aus einer lotrechten Position herausgekippt ist. Bei Förderrollen, die mit einem Gefälle angeordnet sind, wäre die Drehachse 21 des Kickerrades 20 aus der zur Förderebene senkrechten Position herausgekippt. Aus diesem Grund überstreichen die Schaufeln 22 des Kickerrades 20, die z.B. als Rundschnüre aus einem elastischen Material ausgebildet sind, keine horizontale Ebene, wie dies aus dem Stand der Technik bekannt ist, sondern die überstrichene Ebene verläuft mit einem Gefälle zur Horizontalen. In der Schnittansicht der Figur 2b ist erkennbar, dass das Kickerrad 20 bzw. die Drehachse des Kickerrades 20 zentriert zwischen den beiden Förderrollen 12a, 12b und oberhalb der beiden Förderrollen 12a, 12b angeordnet ist, sodass die Schaufeln 22 zwischen die beiden Förderrollen 12a, 12b hineinkämmen können. Die Schaufeln 22 drehen dabei so schnell, dass zuverlässig jeder Vorformling 10 zumindest einmal überstrichen wird.

Aufgrund der Schrägstellung des Kickerrades 20 bzw. der Drehachse des Kickerrades 20 kann der Kämmbereich nahe an den Bereich herangelegt werden, an dem die Vorformlinge unter die Abdeckung 25 geführt werden. Insbesondere vor der Einlaufschräge 26 der Abdeckung 25 besteht besonders hohe Aufstaugefahr.

Die Aussortierung kann noch dadurch verbessert werden, dass seitlich zum Vorformlingsfluss eine Ausblasdüseanordnung 30 vorgesehen ist, die druckluftversorgt bedarfsweise auf auszusondernde Vorformlinge 10 einen Blasimpuls absetzt, um das Aussondern zu beschleunigen. Für die Auslösung des Blasimpulses kann z.B. eine nicht dargestellte Lichtschranke so angeordnet sein, dass ein zu hoch ragender Vorformling 10 den Lichtschrankenstrahl durchbricht, sobald er in den Kämmbereich einläuft. Die Ausblasdüseanordnung 30 ist dabei so ausgerichtet, dass der Blasimpuls in Richtung auf den Kämmbereich abgesetzt wird und einen quer zur Förderrichtung gerichteten Ausschleusimpuls auf den zu hoch ragenden Vorformling ausübt.

## Patentansprüche

1. Vereinzelungsvorrichtung für Vorformlinge mit einer Einrichtung zum Aussondern von falsch positionierten Vorformlingen, wobei die Vereinzelungsvorrichtung als Rollensortierer ausgebildet ist mit zwei sich um parallel zueinander liegenden Drehachsen drehenden Förderrollen, die eine gemeinsame Förderebene aufspannen und die Vorformlinge zwischen sich in einer Förderrichtung fördern, wobei die Einrichtung zum Aussondern von falsch positionierten Vorformlingen ein um eine Drehachse rotierendes Kickerrad mit seitlicher Auswurfrichtung ist, das einen Aussonderbereich oberhalb korrekt positionierter Vorformlinge kämmt, **dadurch gekennzeichnet, dass** das Kickerrad zentrisch zu den Förderrollen und in einem Höhenabstand oberhalb der Förderebene angeordnet ist, wobei sich die Drehachse des Kickerrades im wesentlichen in vertikaler Richtung erstreckt und um einen Neigungswinkel > 0° aus der zur Förderebene senkrechten Position herausgekippt ist.

2. Vereinzelungsvorrichtung nach Anspruch 1, **dadurch gekennzeichnet, dass** die Drehachse in Förderrichtung aus der lotrechten Position herausgekippt ist.

3. Vereinzelungsvorrichtung nach einem der Ansprüche 1 oder 2, **dadurch gekennzeichnet, dass** das Kickerrad höhenverstellbar ausgebildet ist.

4. Vereinzelungsvorrichtung nach Anspruch 3, **dadurch gekennzeichnet, dass** zur Höhenverstellung der Kippwinkel veränderbar ist.

5. Vereinzelungsvorrichtung nach einem der vorhergehenden Ansprüche, **dadurch gekennzeichnet, dass** seitlich der Förderrollen eine Ausblasdüse angeordnet ist, die auf den vom Kickerrad überstrichenen Aussonderbereich gerichtet und zur Beaufschlagung auszusortierender Vorformlinge ausgebildet ist.

6. Vereinzelungsvorrichtung nach Anspruch 5, **dadurch gekennzeichnet, dass** die Ausblasdüse von einer Lichtschranke beherrscht ist.

## Claims

1. Singulation apparatus for preforms comprising a device for eliminating mispositioned preforms, wherein the singulation apparatus is designed as a roll-type sorting apparatus comprising two conveyor rolls, which rotate about axes of rotation that are located parallel to one another and which define a common conveying plane and convey the preforms between one another in a conveying direction, wherein the device for eliminating mispositioned preforms is a kick wheel, which rotates about an axis of rotation and comprises a lateral direction of ejection, and meshes with an elimination region above correctly positioned preforms,
**characterised in that**
the kick wheel is arranged centrally to the conveyor rolls and at a vertical distance above the conveying plane, wherein the axis of rotation of the kick wheel extends substantially in a height direction and is inclined by an angle of inclination > 0° relative to the position extending perpendicular to the conveying plane.

2. Singulation apparatus according to claim 1, **characterised in that** the axis of rotation is inclined in conveying direction relative to the vertical position.

3. Singulation apparatus according to any one of claims 1 or 2, **characterised in that** the kick wheel is embodied so as to be height-adjustable.

4. Singulation apparatus according to claim 3, **characterised in that** the tilt angle can be changed for the height adjustment.

5. Singulation apparatus according to any one of the preceding claims, **characterised in that** a blowout nozzle, which is directed to the eliminating region, across which the kick wheel passes, and which is embodied to impact preforms that are to be eliminated, is arranged on the side of the conveyor rolls.

6. Singulation apparatus according to claim 5, **characterised in that** the blowout nozzle is controlled by a light barrier.

## Revendications

1. Dispositif de séparation de préformes doté d'un mécanisme d'élimination des préformes mal positionnées, le dispositif de séparation étant réalisé sous forme de trieur à galets avec deux galets de transport tournant autour d'axes de rotation parallèles entre eux pour définir un plan de transport commun et transporter entre eux les préformes selon une direction de transport, le mécanisme d'élimination des préformes mal positionnées étant une roue d'éjection tournant autour d'un axe de rotation avec un sens d'éjection latéral et balayant une zone d'éjection située au-dessus des préformes correctement positionnées, **caractérisé en ce que** la roue d'éjection est agencée de façon à être centrée par rapport aux galets de transport à une certaine distance au-dessus du plan de transport, l'axe de rotation de la roue d'éjection s'étendant selon une direction essentiellement verticale en formant un angle d'inclinaison > 0° par rapport à la position perpendiculaire au plan de transport.

2. Dispositif de séparation selon la revendication 1, **caractérisé en ce que** l'axe de rotation étant basculé dans le sens du transport hors de la position verticale.

3. Dispositif de séparation selon l'une des revendications 1 ou 2, **caractérisé en ce que** la position de la roue d'éjection est réglable en hauteur.

4. Dispositif de séparation selon la revendication 3, **caractérisé en ce que** l'angle d'inclinaison est modifiable pour le réglage en hauteur.

5. Dispositif de séparation selon l'une des revendications précédentes, **caractérisé en ce qu'**une buse d'éjection agencée latéralement par rapport aux galets de transport est dirigée vers la zone d'éjection balayée par la roue d'éjection et conçue pour agir sur les préformes à éliminer.

6. Dispositif de séparation selon la revendication 5, **caractérisé en ce que** la buse d'éjection est commandée par une barrière photoélectrique.
